# EUROPÄISCHE PATENTANMELDUNG

(11) **EP 3 951 655 A1**
(43) Veröffentlichungstag der Anmeldung: **09.02.2022**
(21) Anmeldenummer: 21190234.1
(22) Anmeldetag: 07.08.2021
(51) Int. Cl.: G06K 9/62, G06K 9/00

(54) **ERKENNUNGSVERFAHREN UND ERKENNUNGSSYSTEM ZUM EINDEUTIGEN ERKENNEN EINES OBJEKTS**

(30) Priorität: 07.08.2020 DE 102020120962
(71) Anmelder: ThePeople.de GmbH, 74223 Flein (DE)
(72) Erfinder: NÄGELE, Carl Michael, 74223 Flein (DE); FISCHER, Rudolf Andreas, 74223 Flein (DE)
(74) Vertreter: Raible Deissler Lehmann Patentanwälte PartG mbB

(57) **Zusammenfassung**

Die vorgestellte Erfindung betrifft ein computerimplementiertes Erkennungsverfahren (100) zum eindeutigen Erkennen eines Objekts. Das Erkennungsverfahren (100) umfasst einen ersten Ermittlungsschritt (101) zum Ermitteln von Referenzinformation durch Erfassen einer Anzahl auf einem Referenzobjekt aufgebrachter Symbole mittels eines ersten optischen Sensors (201) zu einem ersten Zeitpunkt, einen Trainingsschritt (103) zum Trainieren eines maschinellen Lerners anhand der Referenzinformationen und einer bereitgestellten Grundwahrheit, die jeweilige Referenzinformationen einer ersten Klasse oder einer weiteren Klasse zuordnet, einen zweiten Ermittlungsschritt (105) zum Ermitteln von Probeninformationen durch Erfassen einer Anzahl auf einem Probenobjekt aufgebrachter Symbole mittels eines zweiten optischen Sensors (205) zu einem zweiten Zeitpunkt, einen Zuordnungsschritt (107) zum Zuordnen der Probeninformationen zu der ersten Klasse oder der weiteren Klasse durch den maschinellen Lerner und einen Ausgabeschritt (109) zum Ausgeben eines Validierungssignals für den Fall, dass der maschinelle Lerner die Probeninformationen der Klasse ersten Klasse zuordnet.

Ferner betrifft die vorgestellte Erfindung ein Erkennungssystem (200).

## Beschreibung

Die vorgestellte Erfindung betrifft ein Erkennungsverfahren und ein Erkennungssystem zum eindeutigen Erkennen eines Objekts.

Zahlreiche Objekte, wie bspw. Konsumgüter, werden in industriellen Prozessen in großer Stückzahl in sogenannten "Massenproduktionsprozessen" hergestellt, durch die nahezu identische Objekte entstehen.

Insbesondere durch Produktfälscher werden Objekte hergestellt, die einem Objekt eines Originalherstellers möglichst ähneln sollen. Durch Verwendung ähnlicher Produktionsprozesse wird es zunehmend schwierig, Originalgüter von Fälschungen zu unterscheiden.

Um ein Erkennen eines jeweiligen bzw. eines spezifischen Objekts aus einer Vielzahl in einem Massenproduktionsprozess hergestellter Objekte zu ermöglichen, werden in der Regel eindeutige Marker, wie bspw. Klebestreifen oder Ausstanzungen an dem Objekt angebracht. Bei einem Objekt mit fehlendem Marker ist eine falsche negative Einstufung möglich, die ein originales Objekt als gefälschtes Objekt einstuft.

Ferner ist das Anbringen von Markern aufwendig und verändert die Eigenschaften eines Objekts, wie bspw. eine Wasserfestigkeit, da dessen Oberfläche ggf. beschädigt wird.

Weiterhin ist es für einen Nutzer eines Objekts ggf. wünschenswert, sein spezifisches Objekt eindeutig zu erkennen bzw. zu identifizieren, um diesem bspw. eine eindeutige digitale Kennung zuzuordnen. Anhand einer solchen eindeutigen digitalen Kennung kann bspw. ein Service eines Herstellers in Anspruch genommen werden und/oder ein Zustand des Objekts protokolliert werden.

Vor diesem Hintergrund ist es eine Aufgabe der vorgestellten Erfindung, eine Möglichkeit zum eindeutigen Erkennen eines Objekts aus einer Vielzahl mittels eines gleichen Herstellungsverfahrens, aber mit unterschiedlichen Industrieanlagen bzw. Maschinen hergestellter Objekte bereitzustellen, ohne dessen Oberfläche zu beschädigen. Insbesondere ist eine Aufgabe der vorgestellten Erfindung, eine Möglichkeit zum eindeutigen Erkennen und digitalen Verarbeiten eines Objekts aus einer Vielzahl mittels eines gleichen Herstellungsverfahrens, aber mit unterschiedlichen Industrieanlagen bzw. Maschinen hergestellter Objekte bereitzustellen.

Die voranstehend genannte Aufgabe wird gelöst durch den jeweiligen Gegenstand der unabhängigen Ansprüche. Ausgestaltungen der Erfindung ergeben sich aus der Beschreibung, den Figuren und den abhängigen Ansprüchen.

In einem ersten Aspekt wird somit ein computerimplementiertes Erkennungsverfahren zum eindeutigen Erkennen eines Objekts vorgestellt. Das Erkennungsverfahren umfasst einen ersten Ermittlungsschritt zum Ermitteln von Referenzinformationen von mindestens einem Referenzobjekt durch Erfassen einer Anzahl auf einem jeweiligen Referenzobjekt aufgebrachter Symbole mittels eines ersten optischen Sensors zu einem ersten Zeitpunkt, einen Trainingsschritt zum Trainieren eines maschinellen Lerners anhand der Referenzinformationen und einer bereitgestellten Grundwahrheit, die die jeweiligen Referenzinformationen einer ersten Klasse, bspw. einer Klasse "valide" oder einer weiteren Klasse, bspw. einer Klasse "nicht valide" zuordnet, einen zweiten Ermittlungsschritt zum Ermitteln von Probeninformationen durch Erfassen einer Anzahl auf dem zu erkennenden Objekt aufgebrachter Symbole mittels eines zweiten optischen Sensors zu einem zweiten Zeitpunkt, einen Zuordnungsschritt zum Zuordnen der Probeninformationen zu der ersten Klasse oder zu der weiteren Klasse durch den maschinellen Lerner, und einen Ausgabeschritt zum Ausgeben eines Validierungssignals für den Fall, dass der maschinelle Lerner die Probeninformationen der ersten Klasse zuordnet.

Unter einem Symbol ist im Kontext der vorgestellten Erfindung ein Zeichen, wie bspw. ein Buchstabe oder eine Ziffer zu verstehen. Ein Symbol hat in Ausgestaltung der vorgestellten Erfindung eine bekannte Form, wie bspw. eine arabische Ziffer oder eine unbekannte bzw. subjektiv ausgestaltete Form haben. Ein Symbol kann sich in möglicher Ausgestaltung auch in Lichtreflexen, Ecken, Kanten, Falzen, Verschweißungen, Prägungen, Verkrümmungen, Falten, Verschmutzungen, Abstoßungen und/oder Verformungen manifestieren.

Unter einem maschinellen Lerner ist im Kontext der vorgestellten Erfindung ein Computerprogramm zu verstehen, das von einem Prozessor eines Computersystems ausgeführt wird bzw. ausführbar ist und das dazu konfiguriert ist, Daten aus einem bereitgestellten Datensatz, wie die voranstehend genannten Referenzinformationen und/oder Probeninformationen, einer Klasse aus einer Vielzahl Klassen zuzuordnen. Der erfindungsgemäß vorgesehene maschinelle Lerner kann bspw. ein künstliches neuronales Netzwerk, eine Support Vector Maschine oder jeder weitere zum Zuordnen von Daten zu einer Klasse aus einer Vielzahl von Klassen geeignete Algorithmus sein.

Der erfindungsgemäß vorgesehene maschinelle Lerner wird in einem Trainingsschritt mittels einer Grundwahrheit, also einer vorgegebenen Einteilung von Trainingsdaten in jeweilige Klassen, trainiert. Die Grundwahrheit kann bspw. von einem Nutzer vorgegeben sein.

Zum Trainieren des erfindungsgemäß vorgesehenen maschinellen Lerners werden in einem ersten Ermittlungsschritt Referenzinformationen als Trainingsdaten gesammelt. Referenzinformationen können bspw. während eines Herstellungsprozesses von einem Hersteller ermittelt werden, indem ein jeweiliges Referenzobjekt mittels eines ersten optischen Sensors, wie bspw. einer Bilderfassungseinheit erfasst wird. Die Referenzinformationen eines jeweiligen Referenzobjekts sind dabei einer in dem Herstellungsprozess verwendeten spezifischen Maschine des Herstellers zuordenbar. Der Hersteller kann in dem Herstellungsprozess auch parallel verschiedene Maschinen zur parallelen Herstellung von Objekten verwenden und demnach in dem ersten Ermittlungsschritt für die verschiedenen Maschinen jeweilige Referenzinformationen für jeweilige von den verschiedenen Maschinen hergestellte Referenzobjekte ermitteln.

Es ist insbesondere vorgesehen, dass die Referenzinformationen Messdaten von auf einem jeweiligen Referenzobjekt angeordneten bzw. aufgebrachten Symbolen umfassen. Insbesondere können die Referenzinformationen Bildinformationen eines auf das jeweilige Referenzobjekt aufgedruckten oder eingestanzten Codes, wie bspw. eines Herstellungsdatums, eines Strich- oder Matrixcodes, bspw. eines BAR-Codes und/oder EAN-Codes für eine europäische Artikelnummer (European Article Number), umfassen.

Sobald der erfindungsgemäß vorgesehene maschinelle Lerner trainiert ist, kann dieser für einen Zuordnungsschritt verwendet werden, bei dem in einem zweiten Ermittlungsschritt ermittelte Probeninformationen durch den trainierten maschinellen Lerner einer ersten Klasse oder einer weiteren Klasse zugeordnet werden. Bspw. kann die erste Klasse eine Klasse "valide" und die weitere Klasse eine Klasse "nicht valide" sein. Da die Grundwahrheit Informationen darüber umfasst, ob jeweilige Probeninformationen jeweiligen Referenzinformationen zuzuordnen sind, ist der trainierte maschinelle Lerner dazu konfiguriert, jeweilige Probeninformationen der ersten Klasse zuzuordnen, wenn diese mit den zum Training verwendeten Referenzinformationen, die der ersten Klasse zugeordnet wurden, übereinstimmen bzw. diesen gemäß der Grundwahrheit zuzuordnen sind. Daher kann ein Nutzer oder ein System anhand der Zuordnung der Probeninformationen zu einer jeweiligen Klasse erkennen, ob die Probeninformationen den ebenfalls der ersten Klasse zugeordneten Referenzinformationen entsprechen und bei dem zu erkennenden Objekt ein valides Objekt, d.h. bspw. ein von einer spezifischen Maschine eines Herstellers hergestelltes Objekt vorliegt oder ein anderes Objekt vorliegt, wobei sich im letzteren Fall die Probeninformationen von den der ersten Klasse zugeordneten Referenzinformationen unterscheiden.

Durch das Trainieren des maschinellen Lerners anhand der Grundwahrheit wird dieser derart spezifisch auf die durch die Grundwahrheit beurteilten Referenzinformationen eingestellt, dass der maschinelle Lerner für eine Klasse spezifische Merkmale ermittelt, wie bspw. kleinste durch einen Drucker zum Aufbringen jeweiliger Symbole auf ein Objekt bedingter Unregelmäßigkeiten im Verlauf eines Symbols oder Abweichungen in der Position eines Symbols auf einem Objekt. Derartige Abweichungen bzw. Unregelmäßigkeiten können bspw. spezifisch für eine Maschine eines Herstellers sein. Demnach kann anhand derartiger spezifischer Merkmale erkannt werden, ob ein zu erkennendes Objekt mittels dieser spezifischen Maschine hergestellt wurde oder nicht.

Sind spezifische Merkmale in jeweiligen Probeninformationen nicht vorhanden oder nicht besonders stark ausgeprägt, wird der maschinelle Lerner die Probeninformationen bspw. der weiteren Klasse zuordnen.

Die erfindungsgemäß bereitgestellte Grundwahrheit bedingt eine für eine Zuordnung von Probeninformationen zu einer jeweiligen Klasse durch den maschinellen Lerner verwendete Logik. Entsprechend kann durch eine auf bspw. druckerbedingte Abweichungen hin optimierte Grundwahrheit den maschinellen Lerner dazu konfigurieren, besonders druckerbedingte Abweichungen für die Zuordnung heranzuziehen bzw. zu ermitteln.

Sobald der erfindungsgemäße maschinelle Lerner jeweilige Probeninformationen und, dadurch bedingt, ein jeweiliges zu erkennendes Objekt, der ersten Klasse oder der weiteren Klasse zuordnet, kann ein entsprechendes Signal auf einer Ausgabeeinheit, wie bspw. einem Display und/oder einer Signalleuchte und/oder einem Lautsprecher und/oder einer Kommunikationsschnittstelle ausgegeben werden. Für den Fall, dass die jeweiligen Probeninformationen der ersten Klasse zugeordnet werden, wird das Validierungssignal, bspw. ein Signal "valide", ausgegeben, und für den Fall, dass die jeweiligen Probeninformationen der weiteren Klasse zugeordnet werden, kann ein Signal "nicht valide" ausgegeben werden.

Insbesondere kann ein Signal, das in Reaktion auf eine Zuordnung von Probeninformationen zu einer Klasse erzeugt wurde, einem weiteren System, wie bspw. einem Verwaltungsserver eines Herstellers übermittelt werden.

Weiterhin kann ein Signal, das in Reaktion auf eine Zuordnung von Probeninformationen zu einer Klasse erzeugt wurde, einem Datensatz des zu erkennenden Objekts zugeordnet werden. Insbesondere kann dem zu erkennenden Objekt eine eindeutige digitale Kennung, wie bspw. ein Code zugeordnet werden, wenn die Probeninformationen des zu erkennenden Objekts der ersten Klasse zugeordnet werden. Dadurch kann bspw. kenntlich gemacht werden, dass das zu erkennende bzw. das erkannte Objekt von einer spezifischen Maschine eines Herstellers hergestellt wurde.

In einer möglichen Ausgestaltung des vorgestellten Erkennungsverfahrens kann vorgesehen sein, dass der erste Sensor und der zweite Sensor identisch sind.

Für den Fall, dass der erste Sensor und der zweite Sensor identisch sind, kann der Sensor in einen Herstellungsprozess eingebettet sein und eine erste Anzahl durch den Herstellungsprozess hergestellter Objekte in dem ersten Ermittlungsschritt als Referenzobjekte erfassen. Anschließend kann eine weitere Anzahl durch den Herstellungsprozess hergestellter Objekte als Probenobjekte erfasst und mittels des erfindungsgemäßen maschinellen Lerners der ersten Klasse oder der weiteren Klasse zugeordnet werden. Entsprechend können durch einen derartigen Prozess bspw. Produktionsfehler erkannt werden.

Weiterhin kann ein Hersteller unter Verwendung eines jeweiligen Sensors ein zuvor hergestelltes und als Referenzobjekt ermitteltes Objekt als durch den Hersteller hergestelltes Objekt erkennen, indem Probeninformationen des zu erkennenden Objekts und Referenzinformationen desselben Objekts dem maschinellen Lerner zugeführt werden.

Weiterhin kann unter Verwendung eines jeweiligen Sensors zur Durchführung des vorgestellten Erkennungsverfahrens ein Nutzer Messdaten eines beliebigen Referenzobjekts als Referenzinformationen ermitteln und Messdaten eines beliebigen zu erkennenden Objekts, im Folgenden auch als Probenobjekt bezeichnet, als Probeninformationen mit den Referenzinformationen abgleichen, so dass der Nutzer oder ein Hersteller, der ein Ergebnis einer Zuordnung anhand der Probeninformationen verwaltet, überprüfen kann, ob es sich bei dem Probenobjekt um das Referenzobjekt oder zumindest um ein mit derselben Maschine wie das Referenzobjekt hergestelltes Objekt handelt oder nicht.

In einer weiteren möglichen Ausgestaltung des vorgestellten Erkennungsverfahrens kann vorgesehen sein, dass der zweite Sensor als integraler Bestandteil einer mobilen Recheneinheit ausgebildet ist.

Durch Verwendung zweier unterschiedlicher Sensoren, bspw. eines ersten Sensors, der in einen Herstellungsprozess eines Objekts bei einem Hersteller eingebettet ist, und eines zweiten Sensors in einer mobilen Recheneinheit, kann ein Nutzer der mobilen Recheneinheit an einem beliebigen Ort Probeninformationen generieren, die einem maschinellen Lerner zugeführt werden, der anhand von durch den ersten Sensor ermittelten Referenzinformationen trainiert wurde. Entsprechend kann ein beliebiger Nutzer an einem beliebigen Ort sein zu erkennendes Objekt anhand von durch einen jeweiligen Hersteller vorgegebenen Referenzinformationen und einem entsprechend trainierten maschinellen Lerner validieren, d.h. feststellen, ob sein zu erkennendes Objekt von dem jeweiligen Hersteller bzw. von einer spezifischen Maschine des jeweiligen Herstellers hergestellt wurde.

In einer weiteren möglichen Ausgestaltung des vorgestellten Erkennungsverfahrens kann vorgesehen sein, dass die Grundwahrheit dynamisch aktualisiert und der maschinelle Lerner dynamisch neu trainiert wird.

Durch eine Aktualisierung einer Grundwahrheit und ein entsprechend neues Training des maschinellen Lerners kann der maschinelle Lerner an aktuelle Gegebenheiten angepasst werden. Bspw. kann der maschinelle Lerner bei einem Austausch von Komponenten, wie bspw. einem Drucker, in einem Herstellungsprozess eines jeweiligen Objekts anhand einer entsprechend aktualisierten und ggf. neu ermittelten Referenzinformation neu trainiert werden.

Insbesondere kann die Grundwahrheit bei Referenzinformationen, die lediglich anhand eines einzelnen Referenzobjekts ermittelt werden, automatisch die Referenzinformationen der ersten Klasse zuordnen, so dass ein jeweiliges zu erkennendes Objekt, wenn sich dieses von dem Referenzobjekt unterscheidet, der weiteren Klasse zugeordnet werden kann. Entsprechend kann ein Nutzer bspw. ein Referenzobjekt mit einem handschriftlichen Symbol kennzeichnen und in einem ersten Ermittlungsschritt mittels eines Smartphones erfassen. Die ermittelten Referenzinformationen werden dann als Grundwahrheit der ersten Klasse zugeordnet. In einem zweiten Ermittlungsschritt wird als das zu erkennende Objekt das Referenzobjekt oder ein anderes Objekt mittels des Smartphones erfasst und die ermittelten Probeninformationen dem maschinellen Lerner zugeführt. Der maschinelle Lerner ordnet die Probeninformationen der ersten Klasse oder der weiteren Klasse zu. Für den Fall, dass es sich bei dem in dem zweiten Ermittlungsschritt erfassten zu erkennenden Objekt um das Referenzobjekt handelt, wird der maschinelle Lerner die Probeninformationen der ersten Klasse zuordnen, andernfalls der weiteren Klasse. Entsprechend kann das handschriftliche Symbol, insbesondere in Kombination mit weiteren Merkmalen des Referenzobjekts, zum Erkennen des Referenzobjekts verwendet werden.

In einer weiteren möglichen Ausgestaltung des vorgestellten Erkennungsverfahrens kann vorgesehen sein, dass das Erkennungsverfahren einen Vorverarbeitungsschritt zum Vorverarbeiten der Referenzinformationen und/oder der Probeninformationen umfasst, bevor diese dem maschinellen Lerner zugeführt werden, und wobei der Vorverarbeitungsschritt zumindest einen Prozess der folgenden Liste an Prozessen umfasst: Unterscheiden zwischen Symbolinformationen und Hintergrundinformationen mittels eines Symbolerkennungsalgorithmus, Erkennen einzelner Symbole durch einen Symbolerkennungsalgorithmus, Umwandeln von Bildinformationen in Spektralinformationen mittels einer Fouriertransformation.

Zum Optimieren einer Zuordnungsgenauigkeit jeweiliger Informationen, also Referenzinformationen oder Probeninformationen zu einer jeweiligen Klasse eignet sich eine Vorverarbeitung der Informationen. Dabei kann die Vorverarbeitung insbesondere eine Auswahl von Sensordaten aus einer Vielzahl Sensordaten, wie bspw. eine Auswahl eines Bildabschnitts aus einem Bild sein. Bspw. können lediglich Bilddaten ausgewählt werden, die von einem Symbolerkennungsalgorithmus, wie bspw. einem sogenannten "OCR"-Algorithmus, als einem Symbol zugehörig erkannt wurden. Entsprechend kann bspw. ein Bildabschnitt, der einen Code abbildet, ausgewählt und die entsprechenden Informationen dem maschinellen Lerner zugeführt werden.

Weiterhin können dem maschinellen Lerner zuzuführende Daten bzw. Probeninformationen oder Referenzinformationen mittels mathematischer Transformationen, wie bspw. einer Fouriertransformation vorverarbeitet werden, so dass spektrale Informationen besonders stark von dem maschinellen Lerner berücksichtigt werden.

Zusätzlich oder alternativ zu einer mathematischen Transformation kann ein Filteralgorithmus auf jeweilige dem maschinellen Lerner bereitzustellende Informationen angewendet werden, um bspw. bekanntermaßen nicht relevante Informationen herauszufiltern. Derartige Filteralgorithmen können bspw. Farbfilter und/oder Frequenzfilter umfassen.

Insbesondere kann ein Filteralgorithmus verwendet werden, der lediglich eine Anzahl vorgegebener Symbole dem maschinellen Lerner bereitstellt und sämtliche Informationen, die nicht der Anzahl vorgegebener Symbole zuzuordnen sind, herausfiltert.

Zum Verhindern einer Manipulation einer Auswertung des maschinellen Lerners durch einen Nutzer kann vorgesehen sein, dass verschiedene Filter zufällig oder gemäß einer vorgegebenen Logik auf jeweilige ermittelte Probeninformationen bzw. Referenzinformationen angewendet werden. Dabei kann der maschinelle Lerner in Abhängigkeit eines jeweilig angewendeten Filters angepasst werden, indem bspw. eine Kernelfunktion dem jeweilig angewendeten Filter entsprechend gewählt wird. Dabei kann die Kernelfunktion anhand von Referenzdaten trainiert worden sein, die mit dem jeweilig angewendeten Filter bearbeitet wurden.

In einer weiteren möglichen Ausgestaltung des vorgestellten Erkennungsverfahrens kann vorgesehen sein, dass die Referenzinformationen in einem Herstellungsprozess des jeweiligen Referenzobjekts von einer als vertrauenswürdig eingestuften Entität ermittelt werden und die Probeninformationen von einer nicht als vertrauenswürdig eingestuften Entität außerhalb eines Herstellungsprozesses des zu erkennenden Objekts ermittelt werden.

Durch eine vertrauenswürdige Entität, wie bspw. einen von einem Hersteller eines Produkts betriebenen Server, kann eine vertrauenswürdige Datenbasis in Form von Referenzinformationen bereitgestellt werden, die als Grundlage für einen Abgleich mit weiteren Daten verwendet werden kann, die bspw. von einem Nutzer als Probeninformationen bereitgestellt werden.

In einer weiteren möglichen Ausgestaltung des vorgestellten Erkennungsverfahrens kann vorgesehen sein, dass das Erkennungsverfahren einen Überprüfungsschritt umfasst, bei dem jeweilige von einem spezifischen Nutzer bereitgestellte erste Probeninformationen mittels eines weiteren maschinellen Lerners ausgewertet werden, wobei der weitere maschinelle Lerner anhand von in der Vergangenheit bereits von dem spezifischen Nutzer bereitgestellten zweiten Probeninformationen trainiert ist und die ersten Probeninformationen der ersten Klasse oder der weiteren Klasse zuordnet.

Durch einen Überprüfungsschritt mittels eines weiteren maschinellen Lerners, der auf einen jeweiligen Nutzer spezifisch trainiert ist, d.h. der anhand von von bspw. einem Gerät eines Nutzers oder durch eine Kennung eines Nutzers in der Vergangenheit bereits bereitgestellten Probeninformationen trainiert wurde bzw. trainiert ist, kann eine von dem Nutzer versuchte Doppelerkennung, also ein Vorgang, bei dem ein Nutzer wiederholt versucht, dasselbe zu erkennende Objekt dem erfindungsgemäßen Erkennungsverfahren zuzuführen, erkannt werden. Entsprechend kann für den Fall, dass die in der Vergangenheit bereitgestellten Probeninformationen durch den weiteren maschinellen Lerner einer Klasse "identisch" zugeordnet werden, ein Warnhinweis ausgegeben werden. Dabei kann eine Grundwahrheit zum Trainieren des weiteren maschinellen Lerners automatisch bereitgestellt werden, da in der Vergangenheit bereits bereitgestellte Probeninformationen der Klasse "identisch" zugeordnet werden müssen. Entsprechend kann der weitere maschinelle Lerner sehr spezifisch auf die in der Vergangenheit bereitgestellten Probeninformationen trainiert werden.

Beim Bereitstellen von in der Vergangenheit bereits bereitgestellten Probeninformationen für einen weiteren maschinellen Lerner können die Probeninformationen mittels eines Vorverarbeitungsschritts, analog zu einem Vorverarbeitungsprozess für den erfindungsgemäß vorgesehenen maschinellen Lerner, vorverarbeitet werden, um bspw. Umgebungseinflüsse, insbesondere verschiedene Lichteinfälle oder Bedienungseinflüsse, wie bspw. verschiedene Betrachtungswinkel, zu minimieren. Zum Minimieren von Umgebungseinflüssen hat sich eine Vorverarbeitung mittels einer mathematischen Transformation, insbesondere einer Fouriertransformation als besonders geeignet erwiesen. Alternativ oder zusätzlich können in einem Vorverarbeitungsschritt jeweilige Probeninformationen aus einer Gesamtheit an Probeninformationen ausgewählt werden.

In einer weiteren möglichen Ausgestaltung des vorgestellten Erkennungsverfahrens kann vorgesehen sein, dass die Grundwahrheit Referenzinformationen, die eine Abweichung jeweiliger, insbesondere gedruckter Referenzsymbole von einem Idealsymbol zeigen, die größer ist als ein Validierungsschwellenwert, der Klasse "nicht valide" zuordnet, und Referenzinformationen, die eine Abweichung jeweiliger, insbesondere gedruckter Referenzsymbole von einem Idealsymbol zeigen, die kleiner oder gleich dem Validierungsschwellenwert ist, der ersten Klasse zuordnet.

Mittels eines Validierungsschwellenwerts, der bspw. eine Abweichung jeweiliger zu vergleichender Datensätze in Prozent angibt, kann eine Grundwahrheit automatisch bereitgestellt werden. Dabei kann der Validierungsschwellenwert von einem Nutzer, wie bspw. einem Hersteller vorgegeben werden, da dieser eine Vertrauenswürdigkeit bzw. eine Qualität des vorgestellten Erkennungsverfahrens beeinflusst.

In einer weiteren möglichen Ausgestaltung des vorgestellten Erkennungsverfahrens kann vorgesehen sein, dass der maschinelle Lerner anhand von Referenzinformationen trainiert wird, die spezifische Merkmale umfassen, die Abweichungen von mindestens einem auf dem jeweiligen Referenzobjekt aufgebrachten Symbol von einem Idealsymbol entsprechen.

Durch Vorgabe von Referenzinformationen zum Trainieren des erfindungsgemäß vorgesehenen maschinellen Lerners kann der maschinelle Lerner auf ein Erkennen von in den vorgegebenen Referenzinformationen vorhandenen spezifischen Merkmalen, wie bspw. einem durch ein Drucksystem bedingten speziellen Druckbild von Buchstaben, das von einem Idealsymbol bspw. durch kleinere Unregelmäßigkeiten abweicht, optimiert werden. Entsprechend kann ein derart optimierter bzw. trainierter maschineller Lerner erkennen, ob jeweilige Probeninformationen von einem jeweiligen Drucksystem, wie bspw. einem herstellereigenen Druckkopf oder einem anderen Druckkopf erzeugt wurden und die Probeninformationen bspw. entsprechend der ersten Klasse zuordnen, wenn die Probeninformationen durch den herstellereigenen Druckkopf erzeugt wurden.

In einer weiteren möglichen Ausgestaltung des vorgestellten Erkennungsverfahrens kann vorgesehen sein, dass die spezifischen Merkmale bzw. die Abweichungen ausgewählt sind aus: Abweichungen in auf einem jeweiligen Referenzobjekt aufgebrachten Symbolen zu jeweiligen Idealsymbolen, insbesondere Unterschiede in Punkten, Auslassungen, Verwischungen, Ausbrüchen, Prägungen, Abrieb, insbesondere bei gedruckten, gestempelten, gestanzten, gelaserten, gravierten oder geprägten Schriftzeichen, Grafiksymbolen und/oder Codes, und/oder Positionsabweichungen von auf einem jeweiligen Referenzobjekt aufgebrachten Symbolen, insbesondere Etiketten, Schrumpffolien und/oder Aufdrucken in Relation zu einem Referenzpunkt auf dem Referenzobjekt, und/oder Positionsabweichungen von auf einem jeweiligen Referenzobjekt aufgebrachten Symbolen zu Kennzeichnungen oder zu Objektbestandteilen, insbesondere zu Ecken, Kanten, Verschlüssen und/oder Falzen des Objekts, und/oder Abweichungen in Reflexen, Licht- und/oder Schattenwurf, insbesondere einem Schattenwurf einer verformbaren Verpackung als jeweiliges Referenzobjekt, Abweichungen von Ecken, Kanten, Falzen, Verschweißungen, Prägungen, Verkrümmungen, Falten, Verschmutzungen, Abstoßungen und/oder Verformungen eines jeweiligen Referenzobjekts, und/oder Farbabweichungen eines jeweiligen Referenzobjekts, und/oder Abweichungen von Inhalten eines durchsichtigen oder transparenten Objekts als Referenzobjekt , und/oder Abweichungen in einer Bedruckstoffstruktur, Etiketten, Folien und/oder Produktumhüllungen eines jeweiligen Referenzobjekts.

In einem zweiten Aspekt betrifft die vorgestellte Erfindung ein Erkennungssystem. Das Erkennungssystem umfasst einen ersten optischen Sensor, der dazu konfiguriert ist, Referenzinformation von mindestens einem Referenzobjekt durch Erfassen einer Anzahl auf einem jeweiligen Referenzobjekt aufgebrachter Symbole zu einem ersten Zeitpunkt zu ermitteln, ein Trainingsmodul, das dazu konfiguriert ist, einen maschinellen Lerner anhand der Referenzinformationen und einer bereitgestellten Grundwahrheit, die jeweilige Referenzinformationen einer ersten Klasse oder einer weiteren Klasse zuordnet, zu trainieren, einen zweiten optischen Sensor, der dazu konfiguriert ist, Probeninformationen durch Erfassen eines zu erkennenden Objekts, d.h. eines Probenobjekts zu einem zweiten Zeitpunkt zu ermitteln, wobei das Probenobjekt eine Anzahl Probensymbole, insbesondere gedruckter Probensymbole, aufweist, ein Klassifikationsmodul, das dazu konfiguriert ist, die Probeninformationen der ersten Klasse oder der weiteren Klasse mittels des maschinellen Lerners zuzuordnen, und eine Ausgabeeinheit zum Ausgeben eines Validierungssignals für den Fall, dass der maschinelle Lerner die Probeninformationen der ersten Klasse zuordnet.

Das vorgestellte Erkennungssystem dient insbesondere zum Ausführen des vorgestellten Erkennungsverfahrens.

Es ist weiterhin möglich, dass das Referenzobjekt als Packung bzw. Verpackung für einen Inhalt als weiteres Objekt ausgebildet und/oder zu bezeichnen ist. Dabei ist es möglich, dass zum Trainieren des beschriebenen maschinellen Lerners Referenzinformationen der Packung und/oder auf der Packung, die bspw. während des Herstellungsprozesses der Packung üblicherweise maschinell erzeugt werden, von dem Hersteller ermittelt und/oder, bspw. in einer Datenbank, gesammelt werden, indem eine jeweilige Packung als Referenzobjekt mittels des ersten optischen Sensors, wie bspw. einer Bilderfassungseinheit, erfasst wird. Dabei werden als Referenzinformationen spezifische Merkmale des als Packung ausgebildeten Referenzobjekts berücksichtigt, wobei diese Referenzinformationen, bspw. die spezifischen Merkmale, üblicherweise Abweichungen von Symbolen als Referenzsymbole von einem jeweiligen hierfür vorgesehenen Idealsymbol umfassen können, wobei Idealsymbole als Symbole bspw. in der Datenbank definiert sind, die von dem maschinellen Lerner aktualisiert werden kann. Dabei ist es möglich, dass als Symbol ein optisch sichtbares und/oder ein funktionelles Merkmal der Packung verwendet wird bzw. werden. Hierbei kann es sich um eine Öffnung und/oder einen Verschluss der Packung handeln.

Dabei kann die Packung als Referenzobjekt zum Bevorraten eines Füllguts, bspw. eines festen fließfähiges Feststoffs oder einer Flüssigkeit, als Inhalt der Packung ausgebildet sein, wobei ein derartiges Füllgut weiterhin als Nahrungsmittel und/oder Konsummittel ausgebildet sein kann. Ein festes fließfähiges Füllgut ist bspw. gemahlener Kaffee, Kaffee, der als Kaffeebohnen vorliegt, Reis, Zucker, Salz oder Mehl. Ein flüssiges fließfähiges Füllgut kann ein Getränk, bspw. ein fertig zubereiteter Kaffee, sein. Ein jeweiliges Füllgut kann über die Öffnung in die Packung eingefüllt und über dieser auch wieder entnommen werden. Somit ist es möglich, dass die Packung als Referenzobjekt zur Aufnahme von Kaffee als mögliches Nahrungs- und/oder Konsummittel ausgebildet ist. Es ist weiterhin möglich, dass die Öffnung als Ventil der Packung ausgebildet sein bzw. bezeichnet werden kann. Üblicherweise weist eine derartige Öffnung einen kleinen Schlitz auf, der in der Regel eine maschinenspezifische Form und/oder Position als spezifisches Merkmal auf der Packung aufweist. Dabei hängt eine derartige Position und/oder Form als spezifisches Merkmal auf dem Objekt, bspw. der Packung bzw. Verpackung, davon ab, von welcher Maschine unter mehreren Maschinen, das Objekt und somit auch dessen Öffnung hergestellt ist bzw. wurde, wobei die Position und/oder Form von Maschine zu Maschine maschinenspezifisch variiert. Dabei wird das Symbol, wie hier bspw. die Öffnung mit dem kleinen Schlitz von einer ersten Maschine an einer ersten Position auf dem Objekt, bspw. der Packung, aufgebracht und weist eine erste Form auf. Dagegen wird das Symbol, hier bspw. die Öffnung mit dem kleinen Schlitz von einer zweiten Maschine an einer zweiten Position auf dem Objekt, bspw. der Packung, aufgebracht und weist eine zweite Form auf. Dabei wird zwischen unterschiedlichen Objekten anhand maschinenspezifischer Positionen und Formen eines jeweiligen Symbols, wie bspw. der Öffnung mit dem kleinen Schlitz, unterschieden. Wobei ein jeweiliges Objekt von dem maschinellen Lerner anhand eines spezifischen Merkmals erkannt wird, das beim Herstellen des Objekts durch die jeweilige Maschine auf dem Objekt von außen erkennbar maschinenspezifisch erzeugt, d.h. auf- bzw. angebracht wird bzw. worden ist. Dabei kann von dem maschinellen Lerner die erste Position der ersten Klasse und die zweite Position der weiteren Klasse zugeordnet werden. Entsprechend kann von dem maschinellen Lerner die erste Form der ersten Klasse und die zweite Form der weiteren Klasse zugeordnet werden. In Ausgestaltung ist für eine jeweilige Position eines Symbols eine Idealposition und/oder für eine jeweilige Form eines Symbols eine Idealform als mögliches Idealsymbol vorgesehen, wobei eine sensorisch erfasste reale Position von der Idealposition maschinenspezifisch abweicht, und/oder wobei eine sensorisch erfasste reale Form von der Idealform maschinenspezifisch abweicht. Etwaige Abweichungen von der Idealposition und/oder Idealform werden von dem maschinellen Lerner als spezifische Merkmale ermittelt, wobei die Datenbank verwendet werden kann, die Informationen zu Idealpositionen und/oder Idealformen als Idealsymbole aufweist. Abhängig davon, ob und wie sehr ein Symbol von einem hierfür vorgesehenen Idealsymbol abweicht, also wie sehr Symbole einander ähneln oder voneinander abweichen, werden Rückschlüsse zu einer Herstellung des Objekts erlangt, wobei jedes Objekt anhand von sensorisch ermittelten Merkmalen, bspw. Symbolen, d. h. Referenzsymbolen, bspw. Realpositionen und/oder Realformen der jeweiligen Symbole, erkannt bzw. identifiziert wird. Dabei ist es möglich, jedes Objekt anhand eines jeweiligen Symbols jener Maschine zuzuordnen, von der es hergestellt worden ist.

Es ist möglich, dass die Referenzinformationen Bildinformationen eines aufgedruckten oder eingestanzten, maschinenlesbaren Codes, wie bspw. eines Herstellungsdatums, eines Strich- oder Matrixcodes, bspw. eines EAN- und/oder BAR-Codes, umfassen, wobei ein derartiger Code ebenfalls auf einer Packung als Referenzobjekt beim Herstellen von einer Maschine aufgebracht wird. Dabei umfasst der Code bspw. ein Datum und eine Urzeit, eine Chargennummer und/oder Auslassungen als Ziffern, die ebenfalls von Maschine zu Maschine beim Herstellen eines jeweiligen Objekts auf diesem unterschiedlich aufgebracht werden. Dabei ist es möglich, dass bei einem derartigen Herstellen ein als Packung ausgebildetes Objekt mit dem Inhalt, bspw. Füllgut, ge- bzw. befüllt wird. Derartige Ziffern des voranstehend genannten Codes können von der jeweiligen Maschine an einem Rand des Codes angeordnet, bspw. aufgedruckt, sein bzw. werden. Derartige maschinenspezifische Codes werden von dem maschinellen Lerner ebenfalls erkannt und/oder weiterverarbeitet.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen schematisch und ausführlich beschrieben.

Es zeigen:
- Figur 1: eine mögliche Ausgestaltung des erfindungsgemäßen Erkennungsverfahrens,
- Figur 2: eine mögliche Ausgestaltung des vorgestellten Erkennungssystems.

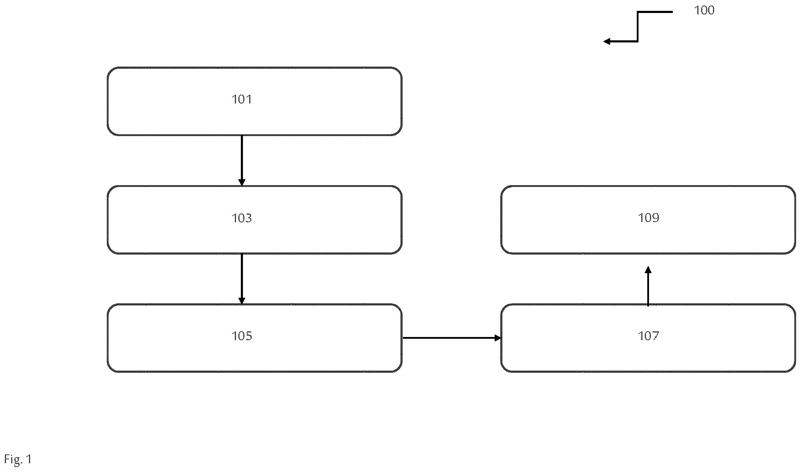

In Figur 1 ist ein computerimplementiertes Erkennungsverfahren 100 zum eindeutigen Erkennen eines Objekts dargestellt.

Das Erkennungsverfahren 100 umfasst einen ersten Ermittlungsschritt 101 zum Ermitteln von Referenzinformationen durch Erfassen einer Anzahl auf einem Referenzobjekt aufgebrachter Symbole mittels eines ersten optischen Sensors zu einem ersten Zeitpunkt.

Der erste Ermittlungsschritt 101 kann bspw. von einem Hersteller eines Referenzobjekts während eines Herstellungsprozesses bspw. unter Verwendung einer stationären Bilderfassungsanlage durchgeführt werden. Insbesondere kann das Referenzobjekt während des ersten Ermittlungsschritts mehrmals, bspw. aus verschiedenen Aufnahmewinkeln und/oder unter verschiedenen Beleuchtungsbedingungen erfasst werden.

Alternativ kann der erste Ermittlungsschritt von einem Nutzer eines Referenzobjekts während des ersten Zeitpunkts, bspw. unter Verwendung eines Smartphones bzw. eines Bilderfassungssensors eines Smartphones durchgeführt werden. Dabei können dem Nutzer Anweisungen ausgegeben werden, die den Nutzer zum Erzeugen verschiedener Aufnahmen, bspw. aus verschiedenen Aufnahmewinkeln und/oder unter verschiedenen Beleuchtungsbedingungen, anleiten. Optional kann ein Nutzer dazu angeleitet werden, ein Video, also eine Anzahl zusammenhängender Bilder von dem Referenzobjekt als Referenzinformationen zu ermitteln. Zum Anleiten des Nutzers können dem Nutzer die Anweisungen bspw. akustisch und/oder visuell auf einem Smartphone ausgegeben werden.

Weiterhin umfasst das Erkennungsverfahren 100 einen Trainingsschritt 103 zum Trainieren eines maschinellen Lerners anhand der Referenzinformationen und einer bereitgestellten Grundwahrheit, die jeweilige Referenzinformationen einer ersten Klasse, bspw. einer Klasse "valide" oder einer weiteren Klasse, bspw. einer Klasse "nicht valide" zuordnet.

Der Trainingsschritt 103 kann insbesondere auf einer Recheneinheit, wie bspw. einem Server durchgeführt werden, der mit einem Sensor zum Durchführen des ersten Ermittlungsschritts 101 kommunikativ verbunden ist. Entsprechend empfängt die Recheneinheit Sensordaten, insbesondere Bilddaten des ersten optischen Sensors und stellt diese dem maschinellen Lerner bereit.

Unter Verwendung einer Grundwahrheit wird der maschinelle Lerner mittels der in dem ersten Ermittlungsschritt 101 ermittelten Sensordaten als erfassten Referenzinformationen trainiert, so dass nach dem Trainingsschritt 103 ein trainierter maschineller Lerner vorliegt. Insbesondere können Referenzinformationen, die in dem ersten Ermittlungsschritt 101 ermittelt wurden, in zwei Teile aufgespalten werden, die mittels der Grundwahrheit einer ersten Klasse oder einer zweiten bzw. weiteren Klasse zugeordnet werden, so dass der maschinelle Lerner lediglich anhand der sensorisch erfassten Referenzinformationen trainiert werden kann. Alternativ oder zusätzlich kann der maschinelle Lerner anhand vorgegebener Referenzinformationen, die bspw. künstlich erzeugt bzw. durch manuelle Manipulationen von Referenzobjekten generiert wurden, trainiert werden.

Die Grundwahrheit kann von einem Nutzer bzw. einem Hersteller bereitgestellt werden und Beispiele umfassen bzw. eine Einteilung definieren, wann Referenzinformationen der ersten Klasse oder der weiteren Klasse zuzuordnen sind.

Weiterhin umfasst das Erkennungsverfahren 100 einen zweiten Ermittlungsschritt 105 zum Ermitteln von Probeninformationen durch Erfassen einer Anzahl auf einem zu erkennenden Objekt, d.h. einem Probenobjekt aufgebrachter Symbole mittels eines zweiten optischen Sensors zu einem zweiten Zeitpunkt.

Bei dem zweiten Ermittlungsschritt 105 werden mittels des zweiten optischen Sensors Probeninformationen von dem zu erkennenden Objekt ermittelt. Dazu kann das zu erkennende Objekt bspw. von einem Nutzer mittels eines Bilderfassungssensors eines Smartphones erfasst werden.

Weiterhin umfasst das Erkennungsverfahren 100 einen Zuordnungsschritt 107 zum Zuordnen der Probeninformationen zu der ersten Klasse oder zu der weiteren Klasse durch den maschinellen Lerner.

Sobald der maschinelle Lerner trainiert ist, kann dieser anhand seiner antrainierten Logik eine Zuordnung von Probeninformationen zu der ersten Klasse oder der weiteren Klasse durchführen.

Weiterhin umfasst das Erkennungsverfahren 100 einen Ausgabeschritt 109 zum Ausgeben eines Validierungssignals für den Fall, dass der maschinelle Lerner die Probeninformationen der ersten Klasse zuordnet.

Um einen Nutzer über ein Ergebnis des Zuordnungsschritts 107 zu informieren oder weiteren Systemen, wie bspw. einem Drittsystem eine automatische Verarbeitung des Ergebnisses des Zuordnungsschritts 107 zu ermöglichen, kann das Ergebnis mittels einer Ausgabeeinheit, wie bspw. einer Anzeige oder einer Kommunikationsschnittstelle zum Übermitteln von Ergebnisdaten an ein Drittsystem, ausgegeben werden.

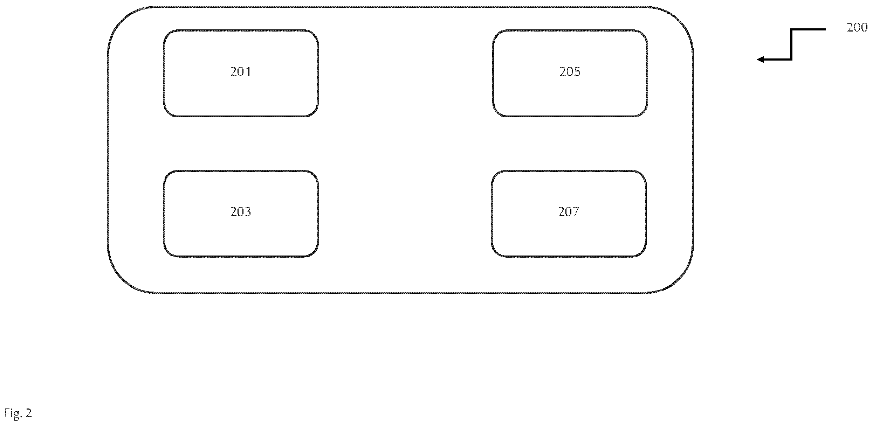

In Fig. 2 ist ein Erkennungssystem 200 dargestellt.

Das Erkennungssystem 200 umfasst einen ersten optischen Sensor 201, der dazu konfiguriert ist, Referenzinformationen durch Erfassen einer Anzahl auf einem Referenzobjekt aufgebrachter Symbole zu einem ersten Zeitpunkt zu ermitteln, ein Trainingsmodul 203, das dazu konfiguriert ist, einen maschinellen Lerner anhand der Referenzinformationen und einer bereitgestellten Grundwahrheit, die jeweilige Referenzinformationen einer ersten Klasse oder einer weiteren Klasse zuordnet, zu trainieren, einen zweiten optischen Sensor 205, der dazu konfiguriert ist, Probeninformationen durch Erfassen eines zu erkennenden Objekts, d.h. eines Probenobjekts zu einem zweiten Zeitpunkt zu ermitteln, wobei das Probenobjekt eine Anzahl Symbole, insbesondere gedruckte Symbole, aufweist, ein Klassifikationsmodul 207, das dazu konfiguriert ist, die Probeninformationen der ersten Klasse oder der weiteren Klasse mittels des maschinellen Lerners zuzuordnen, und eine Ausgabeeinheit 209 zum Ausgeben eines Validierungssignals für den Fall, dass der maschinelle Lerner die Probeninformationen der ersten Klasse zuordnet. In weiterer Ausspaltung wird ein Ungültigkeitssignal ausgegeben für den Fall, dass der maschinelle Lerner die Probeninformation der weiteren Klasse zuordnet.

Das Klassifikationsmodul 207 kann bspw. als Prozessor bzw. Subprozessor eines Computersystems, insbesondere eines Smartphones, ausgestaltet sein.

Der erste optische Sensor 201 kann bspw. ein Smartphone oder eine Kamera in einer Fertigungsstraße sein.

Der zweite optische Sensor 205 kann bspw. ein Smartphone sein.

## Patentansprüche

1. Computerimplementiertes Erkennungsverfahren (100) zum eindeutigen Erkennen eines Objekts,
wobei das Erkennungsverfahren (100) umfasst:
- Ermitteln (101) von Referenzinformationen von mindestens einem Referenzobjekt durch Erfassen einer Anzahl auf einem jeweiligen Referenzobjekt aufgebrachter Symbole mittels eines ersten optischen Sensors (201) zu einem ersten Zeitpunkt,
- Trainieren (103) eines maschinellen Lerners anhand der Referenzinformationen und einer bereitgestellten Grundwahrheit, die jeweilige Referenzinformationen einer ersten Klasse oder einer weiteren Klasse zuordnet,
- Ermitteln (105) von Probeninformationen durch Erfassen einer Anzahl auf dem zu erkennenden Objekt aufgebrachter Symbole mittels eines zweiten optischen Sensors (205) zu einem zweiten Zeitpunkt,
- Zuordnen (107) der Probeninformationen zu der ersten Klasse oder zu der weiteren Klasse durch den maschinellen Lerner,
- Ausgeben (109) eines Validierungssignals für den Fall, dass der maschinelle Lerner die Probeninformationen der ersten Klasse zuordnet.

2. Erkennungsverfahren (100) nach Anspruch 1,
wobei der erste Sensor und der zweite Sensor identisch sind.

3. Erkennungsverfahren (100) nach Anspruch 1,
wobei der zweite Sensor als integraler Bestandteil einer mobilen Recheneinheit ausgebildet ist.

4. Erkennungsverfahren (100) nach einem der voranstehenden Ansprüche,
wobei die Grundwahrheit dynamisch aktualisiert und der maschinelle Lerner dynamisch neu trainiert wird.

5. Erkennungsverfahren (100) nach einem der voranstehenden Ansprüche, wobei das Erkennungsverfahren (100) einen Vorverarbeitungsschritt zum Vorverarbeiten der Referenzinformationen und/oder der Probeninformationen umfasst, bevor diese dem maschinellen Lerner zugeführt werden, und wobei der Vorverarbeitungsschritt zumindest einen Prozess der folgenden Liste an Prozessen umfasst:
- Unterscheiden zwischen Symbolinformationen und Hintergrundinformationen mittels eines Symbolerkennungsalgorithmus,
- Erkennen einzelner Symbole durch einen Symbolerkennungsalgorithmus,
- Umwandeln von Bildinformationen in Spektralinformationen mittels einer Fouriertransformation.

6. Erkennungsverfahren (100) nach einem der voranstehenden Ansprüche, wobei die Referenzinformationen in einem Herstellungsprozess des jeweiligen Referenzobjekts von einer als vertrauenswürdig eingestuften Entität ermittelt werden und die Probeninformationen von einer nicht als vertrauenswürdig eingestuften Entität außerhalb eines Herstellungsprozesses des zu erkennenden Objekts ermittelt werden.

7. Erkennungsverfahren (100) nach einem der voranstehenden Ansprüche, wobei das Erkennungsverfahren (100) einen Überprüfungsschritt umfasst, bei dem jeweilige von einem spezifischen Nutzer bereitgestellte erste Probeninformationen mittels eines weiteren maschinellen Lerners ausgewertet werden, wobei der weitere maschinelle Lerner anhand von in der Vergangenheit bereits von dem Nutzer bereitgestellten zweiten Probeninformationen trainiert ist und die ersten Probeninformationen der ersten Klasse oder der weiteren Klasse zuordnet.

8. Erkennungsverfahren (100) nach einem der voranstehenden Ansprüche, wobei die Grundwahrheit Referenzinformationen, die eine Abweichung jeweiliger, insbesondere aufgebrachter bzw. gedruckter Referenzsymbole von einem Idealsymbol zeigen, die größer ist als ein Validierungsschwellenwert, der Klasse "nicht valide" zuordnet, und
Referenzinformationen, die eine Abweichung jeweiliger, insbesondere gedruckter Referenzsymbole von einem Idealsymbol zeigen, die kleiner oder gleich dem Validierungsschwellenwert ist, der ersten Klasse zuordnet.

9. Erkennungsverfahren (100) nach einem der voranstehenden Ansprüche, wobei der maschinelle Lerner anhand von Referenzinformationen trainiert wird, die spezifische Merkmale umfassen, die Abweichungen mindestens eines der aufgebrachten Symbole von mindestens einem Idealsymbol entsprechen.

10. Erkennungsverfahren (100) nach Anspruch 9,
wobei die spezifischen Merkmale ausgewählt sind aus:
- Abweichungen in auf einem jeweiligen Referenzobjekt aufgebrachten Symbolen zu jeweiligen Idealsymbolen, insbesondere Unterschiede in Punkten, Auslassungen, Verwischungen, Ausbrüchen, Prägungen, Abrieb, insbesondere bei gedruckten, gestempelten, gestanzten, gelaserten, gravierten oder geprägten Schriftzeichen, Grafiksymbolen und/oder Codes; und/oder
- Positionsabweichungen von auf einem jeweiligen Referenzobjekt aufgebrachten Symbolen zu jeweiligen Idealsymbolen, insbesondere von Etiketten, Schrumpffolien und/oder Aufdrucken in Relation zu einem Referenzpunkt auf dem Referenzobjekt; und/oder
- Positionsabweichungen von auf einem jeweiligen Referenzobjekt aufgebrachten Symbolen zu Kennzeichnungen oder zu Objektbestandteilen, insbesondere zu Ecken, Kanten, Verschlüssen und/oder Falzen des Referenzobjekts ; und/oder
- Abweichungen in Reflexen, Licht- und/oder Schattenwurf, insbesondere einem Schattenwurf einer verformbaren Verpackung als Referenzobjekt; und/oder
- Abweichungen von Ecken, Kanten, Falzen, Verschweißungen, Prägungen, Verkrümmungen, Falten, Verschmutzungen, Abstoßungen und/oder Verformungen eines jeweiligen Referenzobjekts; und/oder
- Farbabweichungen eines jeweiligen Referenzobjekts; und/oder
- Abweichungen von Inhalten eines durchsichtigen oder transparenten Objekts als Referenzobjekt ; und/oder
- Abweichungen in einer Bedruckstoffstruktur, in einem Etikett, in einer Folie und/oder einer Produktumhüllung eines jeweiligen Referenzobjekt.

11. Erkennungssystem (200) zum eindeutigen Erkennen eines Objekts, wobei das Erkennungssystem (200) umfasst:
einen ersten optischen Sensor (201), der dazu konfiguriert ist, Referenzinformation von mindestens einem Referenzobjekt durch Erfassen einer Anzahl auf einem jeweiligen Referenzobjekt aufgebrachter Symbole zu einem ersten Zeitpunkt zu ermitteln,
ein Trainingsmodul (203), das dazu konfiguriert ist, einen maschinellen Lerner anhand der Referenzinformationen und einer bereitgestellten Grundwahrheit,
die jeweilige Referenzinformationen einer ersten Klasse oder einer weiteren Klasse zuordnet, zu trainieren,
einen zweiten optischen Sensor (205), der dazu konfiguriert ist, Probeninformationen durch Erfassen eines zu erkennenden Objekts zu einem zweiten Zeitpunkt zu ermitteln, wobei das zu erkennende Objekt eine Anzahl Probensymbole, insbesondere gedruckte Probensymbole, aufweist,
ein Klassifikationsmodul (207), das dazu konfiguriert ist, die Probeninformationen der ersten Klasse oder der weiteren Klasse mittels des maschinellen Lerners zuzuordnen,
eine Ausgabeeinheit (209) zum Ausgeben eines Validierungssignals für den Fall, dass der maschinelle Lerner die Probeninformationen der ersten Klasse zuordnet.
